# EUROPÄISCHE PATENTSCHRIFT

(11) **EP 2 994 988 B1**
(45) Veröffentlichungstag und Bekanntmachung des Hinweises auf die Patenterteilung: **31.05.2017**
(21) Anmeldenummer: 13745029.2
(22) Anmeldetag: 26.07.2013
(51) Int. Cl.: H02M 7/02, G05F 3/04, H02H 1/06, H02H 3/08, H02M 1/00, H02M 7/217

(54) **GERÄTEINTERNE ENERGIEVERSORGUNG EINER VORRICHTUNG**
INTERNAL POWER SUPPLY OF A DEVICE
ALIMENTATION EN ÉNERGIE, À L'INTÉRIEUR D'UN APPAREIL, D'UN DISPOSITIF

(43) Veröffentlichungstag der Anmeldung: 16.03.2016
(73) Patentinhaber: Siemens Aktiengesellschaft, 80333 München (DE)
(72) Erfinder: MAIER, Martin, 92681 Erbendorf (DE); WEISS, Uwe, 92224 Amberg (DE)
(86) Internationale Anmeldenummer: PCT/EP2013/065796
(87) Internationale Veröffentlichungsnummer: WO 2015/010746

(56) Entgegenhaltungen:
- EP-A1- 2 040 084
- WO-A2-2006/031792
- US-A1- 2005 017 602

## Beschreibung

Die Erfindung betrifft eine Vorrichtung, an welche ein dreiphasiges Versorgungsnetz anschließbar ist. Die Vorrichtung dient insbesondere dem Motor- bzw. Leitungsschutz. Hierbei erfolgt über die Vorrichtung eine Energieversorgung eines der Vorrichtung nachgeschalteten Verbrauchers, z.B. ein Elektromotor. Liegt beispielsweise ein dreiphasiges System vor, so kann mit der Vorrichtung der über die drei Phasen L1, L2, L3 des Versorgungsnetzes erfolgenden Energiefluss zum nachgeschalteten Verbraucher überwacht werden. Zur Analyse des über die Phasen erfolgenden Energieflusses umfasst die Vorrichtung eine elektronische Auswerteeinheit. Bei Vorliegen eines kritischen Zustandes unterbricht die Vorrichtung den Energiefluss zum nachgeschalteten Verbraucher. Insbesondere im Bereich der industriellen Automatisierungstechnik kommen derartige Vorrichtungen, wie z.B. ein Leistungsschalter, zum Einsatz. Bei derartigen Vorrichtungen ist eine Energieversorgung der geräteinternen Elektronik (z.B. der elektronischen Auswerteeinheit) notwendig.

Eine geräteinterne Energieversorgung kann beispielsweise über Stromwandler erfolgen. Der Stromwandler wandelt einen AC-Strom im Primärleiter der Vorrichtung in einen Sekundärstrom um, der zur Energieversorgung und Stromerfassung verwendet werden kann. Damit ist zwar eine stromgetriebene, 1 phasige Energieversorgung möglich, jedoch bietet dieses Prinzip Nachteile bei den Punkten DC-Betrieb, kompakter Aufbau und niedrigem Kosten-Niveau.

Alternativ hierzu kann eine geräteinterne Energieversorgung über eine Hilfsspannung erfolgen. Hierbei wird die benötigte Spannung extern z.B. über Klemmen eingespeist, durch ein vorgeschaltetes Netzteil angepasst und danach der elektronischen Auswerteeinheiten zugeführt. Damit ist zwar ein AC- und DC-Betrieb bei kompaktem Aufbau möglich, jedoch bietet dieses Prinzip Nachteile bei den Punkten Stromerfassung und niedrigem Kosten-Niveau. Bedingt durch die unterschiedlichsten Spannungen in den unterschiedlichen Anlagen sind ferner unterschiedliche Netzteilausführungen erforderlich. Ferner entsteht bei einem Anwender ein Mehraufwand, da er zusätzliche Energieversorgungsleitungen benötigt und an die Vorrichtung anschließen muss.

Im Bereich von Energy Harvesting sind ebenso einphasige Netzteile mit Aufwärtswandlern bekannt, welche zur geräteinternen Energieversorgung genutzt werden. Mittels Aufwärtswandler können kleinste Spannungen in verwertbare Elektronikspannungen von einigen Volt umgewandelt werden. Der Nachteil dieser Netzteile ist insbesondere die fehlende, vollständige galvanische Trennung zwischen der Primar- und Sekundärseite innerhalb der Vorrichtung.

Der Erfindung liegt die Aufgabe zugrunde eine verbesserte geräteinterne Energieversorgung für eine Vorrichtung, an welche ein dreiphasiges Versorgungsnetz anschließbar ist, bereitzustellen. Insbesondere soll durch die Vorrichtung eine stromgetriebene Energieversorgung bereitgestellt werden. Hierbei soll vorzugsweise eine galvanische Trennung zwischen der Primar- und Sekundärseite der Vorrichtung, also zwischen den Phasen L1, L2, L3 und der elektronischen Auswerteeinheiten, vorliegen. Vorzugsweise ermöglicht die Vorrichtung ferner eine Überstromauslösung. Die geräteinterne Energieversorgung der Vorrichtung kann vorzugsweise sowohl im AC-Betrieb (z.B. Einphasen-Netz und Drehstrom-Netze) als auch im DC-Betrieb (z.B. Gleichstrom-Netz) erfolgen. Die geräteinterne Energieversorgung ist vorzugsweise mittels eines kompakten Aufbaus und/oder mittels eines niedrigen Kosten-Niveaus umsetzbar.

Mindestens eine dieser Aufgaben wird gelöst durch eine Vorrichtung gemäß Anspruch 1, d.h. durch eine Vorrichtung, an welche ein dreiphasiges Versorgungsnetz anschließbar ist, wobei die Vorrichtung einen dritten Kondensator, über welchen eine geräteinterne Energieversorgung der Vorrichtung erfolgt, eine sekundärseitige Spule, eine Diode und je Phase eine Leitung und eine Schaltung zur Energieversorgung umfasst, wobei die sekundärseitige Spule über die Diode parallel zum dritten Kondensator geschaltet ist, wobei die Schaltung einen Messwiderstand, einen ersten und zweiten Kondensator, einen selbstleitenden Feldeffekttransistor, und eine erste und zweite primärseitige Spule umfasst, wobei die Schaltung derart ausgebildet ist, dass:
- sich der Messwiderstand in der Leitung befindet, so dass über den Messwiderstand eine Eingangsspannung U_{E} abfällt,
- der erste Kondensator parallel zum Messwiderstand geschaltet ist,
- eine Serienschaltung der ersten primärseitigen Spule mit dem selbstleitenden Feldeffekttransistor parallel zum ersten Kondensator geschaltet ist,
- im bestromten Zustand des Leiters von der ersten primärseigen Spule eine Energieübertragung zur zweiten primärseitigen Spule und zur sekundärseitigen Spule erfolgt,
- parallel zur zweiten primärseitigen Spule der zweite Kondensator geschaltet ist,
- der zweite Kondensator ausgangsseitig mit dem Source Anschluss des selbstleitenden Feldeffekttransistors verbunden ist,
- eingangsseitig am zweiten Kondensator der Gate Anschluss des selbstleitenden Feldeffekttransistors angeschlossen ist, so dass im bestromten Zustand des Leiters der selbstleitenden Feldeffekttransistor getaktet angesteuert wird.

Vorteilhafte Weiterbildungen der Erfindung sind in den abhängigen Ansprüchen 2 bis 9 angegeben.

Die Vorrichtung dient insbesondere dem Motor- und/oder Leitungsschutz. Über die Vorrichtung können drei Phasen (L1, L2, L3) eines Versorgungsnetzes geführt werden. Zum Anschließen dieser Phasen umfasst die Vorrichtung je Phase vorzugsweise ein eingangsseitiges und ein ausgangsseitiges Anschlussmittel. Hierbei ist das jeweilige eingangsseitige Anschlussmittel geräteintern über die Leitung mit dem zugehörigen ausgangsseitigen Anschlussmittel verbunden. Die Vorrichtung weist somit je anzuschließende Phase (L1, L2, L3) eine Leitung auf. Die drei Leitungen weisen jeweils eine Schaltung auf. Die Schaltung umfasst jeweils einen Messwiderstand, welcher sich in der zugehörigen Leitung befindet. Im bestromten Zustand der Leitung fließt über den Messwiderstand der Leiterstrom. Über den sich in der Leitung befindenden Messwiderstand fällt in Abhängigkeit des vorliegenden Leiterstroms eine Eingangsspannung U_{E} ab.

Die Vorrichtung weist eine Primärseite auf, mittels welcher eine Energieversorgung einer Sekundärseite der Vorrichtung erfolgt. Die Primärseite ist elektrisch leitend mit der Leitung verbunden. Die Sekundärseite ist elektrisch leitend mit der sekundärseitigen Spule verbunden. Die Energieübertragung von der Primärseite zur Sekundärseite erfolgt durch die erste primärseitige Spule, welche mittels mindestens eines Spulenkerns mit der sekundärseitigen Spule gekoppelt ist, so dass hierüber eine Energieübertragung von der ersten primärseitige Spule zur der sekundärseitigen Spule erfolgen kann. Ferner ist die erste primärseitige Spule mit dem mindestens einen Spulenkern mit der zweiten primärseitigen Spule gekoppelt, so dass eine Energieübertragung von der ersten primärseitigen Spule zur zweiten primärseitigen Spule erfolgen kann.

Bei der Vorrichtung kann zur Energieübertragung von der Primärseite zur Sekundärseite für mehrere Leitungen ein gemeinsamer Spulenkern verwendet werden. Die ersten und zweiten primärseitigen Spulen sowie die sekundärseitige Spule wären hierbei um den gemeinsamen Spulenkern gewickelt. Sekundärseitig ist lediglich die sekundärseitige Spule mit dem Spulenkern gekoppelt. Diese sekundärseitige Spule ist über die Diode mit dem dritten Kondensator verbunden und kann diesen aufladen.

Es ist ebenso denkbar, dass die ersten und zweiten primärseitigen Spulen der einzelnen Schaltungen jeweils einen separaten Spulenkern aufweisen. Je Leitung und somit je Schaltung liegt ein Spulenkern vor. Um den jeweiligen Spulenkern sind die erste primärseitige Spule, die zweite primärseitige Spule und die sekundärseitige Spule gewickelt. Die Vorrichtung würde somit je Leitung eine erste und zweite primärseitige Spule und eine sekundärseitige Spule aufweisen, welche um einen gemeinsamen Spulenkern gewickelt sind. Die sekundärseitigen Spulen sind jeweils über eine separate Diode mit dem dritten Kondensator verbunden, so dass der dritte Kondensator über die sekundärseitigen Spulen mit Energie gespeist wird.

Die Energieübertragung von der Primärseite zur Sekundärseite erfolgt von der ersten primärseitigen Spule über den Spulenkern zur sekundärseitigen Spule. Die Sekundärseite ist galvanisch getrennt zur Primärseite. Ferner sind die Leitungen sowie der primärseitige Teil der Schaltungen zueinander galvanisch getrennt.

Bei Vorliegen eines Leiterstroms wird über die erste primärseitige Spule Energie in die zweite primärseitige Spule übertragen. Mittels des in die zweite Spule induzierten Stroms wird der zweite Kondensator geladen. Ferner erfolgt über die zweite primärseitige Spule ein getaktetes Ansteuern des selbstleitenden Feldeffekttransistors über dessen Gate Anschluss. Durch die getaktete Ansteuerung des selbstleitenden Feldeffekttransistors wird die Schaltung zum Schwingen gebracht, so dass auf der Sekundärseite der Kondensator geladen wird.

Durch diesen Schaltungsaufbau wird erreicht, dass im bestromten Zustand des Leiters eine über dem zweiten Kondensator abfallende Ausgangsspannung U_{A} größer ist als die Eingangsspannung U_{E}.

Über den dritten Kondensator wird die geräteinterne Energieversorgung bereitgestellt. Mittels des dritten Kondensators wird insbesondere eine elektronische Auswerteeinheit der Vorrichtung mit Energie versorgt. Die elektronischen Auswerteeinheit dient insbesondere dem Erfassen eines Überstroms und/oder einem Erfassen der Überlast von Motoren und/oder Leitungen.

Der dritte Kondensator dient ferner der Glättung der über die sekundärseitige Spule bereitgestellten Energie sowie der Pufferung der geräteinternen Energieversorgung.

In einer vorteilhaften Ausführungsform der Erfindung umfasst die Schaltung einen selbstsperrenden Feldeffekttransistor, welcher parallel zum selbstleitenden Feldeffekttransistor geschaltet ist, wobei der Gate Anschluss des selbstsperrenden Feldeffekttransistors eingangsseitig am zweiten Kondensator angeschlossen ist, so dass im bestromten Zustand des Leiters der selbstsperrende Feldeffekttransistor getaktet angesteuert wird. Dadurch, dass der selbstsperrende Feldeffekttransistor parallel zum selbstleitenden Feldeffekttransistor geschaltet ist, ist eine Steigerung des Wirkungsgrads der Energieversorgung möglich. Der jeweilige Feldeffekttransistor kann ebenso als MOSFET ausgebildet sein.

Die Diode und die sekundärseitige Spule sowie der dritte Kondensator sind galvanisch getrennt von der Primärseite der Vorrichtung, welche den selbstleitenden und selbstsperrenden Feldeffekttransistor, den ersten und zweiten Kondensator, die erste und zweite primärseitige Spule und den Messwiderstand umfasst.

In einer weiteren vorteilhaften Ausführungsform der Erfindung umfasst die Vorrichtung je Leitungen eine sekundärseitige Spule und eine Diode, wobei der dritte Kondensator eingangsseitig jeweils mit der Diode und ausgangsseitig jeweils mit dem nicht zur Diode führenden Spulenanschluss der sekundärseitigen Spule verbunden ist.

Bei dem dreiphasigen System umfasst die Vorrichtung drei Leitungen, welche jeweils eine Schaltung aufweisen. Die Energieübertragung von der Primärseite zur Sekundärseite erfolgt mittels der ersten primärseitigen Spule zur zugehörigen sekundärseitigen Spule. Die drei sekundärseitigen Spulen sind jeweils über eine Diode mit dem dritten Kondensator verbunden. Der dritte Kondensator ist folglich mit jeweils einer Diode der drei sekundärseitigen Spulen und somit mit drei Dioden eingangsseitig verbunden. Der dritte Kondensator ist insbesondere eingangsseitig jeweils mit der Kathode der Diode der jeweiligen Schaltung verbunden.

In einer weiteren vorteilhaften Ausführungsform der Erfindung sind die erste, zweite primärseitige Spule und die sekundärseitige Spule jeweils durch eine Leiterplattenspule ausgebildet.

In einer weiteren vorteilhaften Ausführungsform der Erfindung ist die Induktivität der ersten primärseitigen Spule kleiner der Induktivität der zweiten primärseitigen Spule. Die Induktivität der ersten primärseitigen Spule liegt vorzugsweise ca. zwischen 1 µH bis 10 µH.

In einer weiteren vorteilhaften Ausführungsform der Erfindung ist die Induktivität der ersten primärseitigen Spule kleiner als die Induktivität der sekundärseitigen Spule. Die Induktivität der zweiten primärseitigen Spule liegt vorzugsweise ca. zwischen 5 mH bis 50 mH.

In einer weiteren vorteilhaften Ausführungsform der Erfindung ist die Induktivität der zweiten primärseitigen Spule ähnlich der Induktivität der sekundärseitigen Spule. Die Induktivität der sekundärseitigen Spule liegt vorzugsweise ca. zwischen 5 mH bis 50 mH.

In einer weiteren vorteilhaften Ausführungsform der Erfindung ist die Kapazität des ersten Kondensators größer der Kapazität des zweiten Kondensators. Die Kapazität des ersten Kondensators liegt vorzugsweise ca. zwischen 1 µF bis 100 µF.

In einer weiteren vorteilhaften Ausführungsform der Erfindung ist die Kapazität des ersten Kondensators ähnlich der Kapazität des dritten Kondensators. Die Kapazität des dritten Kondensators liegt vorzugsweise ca. zwischen 1 µF bis 220 µF.

In einer weiteren vorteilhaften Ausführungsform der Erfindung ist die Kapazität des zweiten Kondensators kleiner der Kapazität des dritten Kondensators. Die Kapazität des zweiten Kondensators liegt vorzugsweise ca. zwischen 10 pF bis 10 nF.

In einer weiteren vorteilhaften Ausführungsform der Erfindung ist der Messwiderstand ein Shunt. Der Wiederstand des Messwiderstands liegt vorzugsweise ca. zwischen 10 mΩ und 100 mΩ.

In einer weiteren vorteilhaften Ausführungsform der Erfindung erfolgt durch eine Auswertung der über den dritten Kondensator vorliegenden Ausgangsspannung U_{A} eine Überstromauslösung für einen nachgeschalteten Verbraucher.

Hierfür umfasst die Vorrichtung insbesondere eine Stromerfassungseinheit. Die Energieversorgung der Stromerfassungseinheit erfolgt vorzugsweise über den dritten Kondensator. Mittels der Stromerfassungseinheit kann zunächst über die vorliegende Ausgangsspannung U_{A} einen Rückschluss auf die vorliegende Stromhöhe gewonnen werden. Wird ein in der Stromerfassungseinheit hinterlegter Schwellwert überschritten, so detektiert die Stromerfassungseinheit einen Überstrom und unterbricht den über die Leitung erfolgenden Energiefluss zu dem der Vorrichtung nachgeschalteten Verbraucher. Der hinterlegte Schwellwert charakterisiert beispielsweise den 10-fachen Nennstrom der Leitung. Die Stromerfassungseinheit ist insbesondere ein Mikrocontroller. Die Stromerfassungseinheit ist insbesondere Bestandteil der elektronische Auswerteeinheit.

In einer weiteren vorteilhaften Ausführungsform der Erfindung befindet sich in den Leitungen jeweils ein Schaltelement, mittels welchem der Energiefluss über die Leitung unterbrochen werden kann. Das Schaltelement ist insbesondere ein elektromechanisches Schaltelement. Über die Vorrichtung können insbesondere drei Phasen eines Versorgungsnetzes zu einem Verbraucher geführt werden, so dass die Vorrichtung drei Leitungen umfasst. Jede dieser Leitungen weist folglich ein Schaltelement zum Unterbrechen des Energieflusses zum nachgeschalteten Verbraucher auf. Wird durch die Vorrichtung ein Überstrom detektiert, so wird vorzugsweise mittels der Schaltelemente der Energiefluss zum nachgeschalteten Verbraucher unterbrochen.

Über die Vorrichtung wird insbesondere die Energieversorgung zu einem Elektromotor geführt. Die Vorrichtung ist insbesondere eine Vorrichtung für die industrielle Automatisierungstechnik, insbesondere ein Leistungsschalter.

In einer weiteren vorteilhaften Ausführungsform der Erfindung erfolgt die geräteinterne Energieversorgung der Vorrichtung vollständig über die am dritten Kondensator anliegende Ausgangsspannung U_{A}. Der dritte Kondensator umfasst hierfür insbesondere zwei Anschlussstellen.

In einer weiteren vorteilhaften Ausführungsform der Erfindung weist die Schaltungen einen gemeinsamen Spulenkern auf. Die erste und zweite primärseitige Spule und die sekundärseitige Spule der Schaltungen sind somit um einen gemeinsamen Spulenkern gewickelt.

Der Spulenkern ist beispielsweise ein Ferritkern.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer Vorrichtung, an welche ein dreiphasiges Versorgungsnetz angeschlossen ist, und
- FIG 2: einen schematischen Aufbau der Sekundärseite der Vorrichtung aus FIG 1.

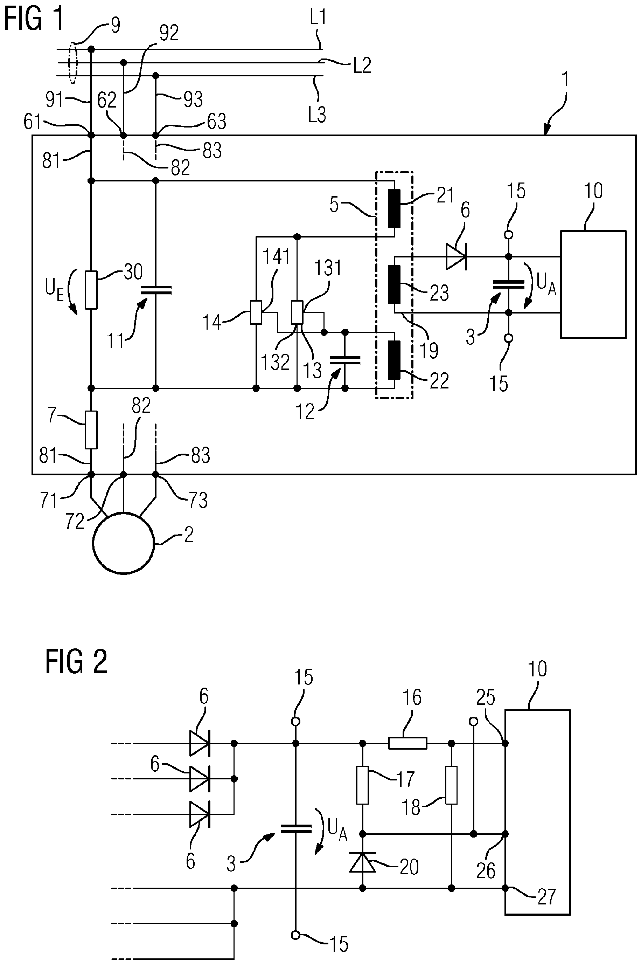

FIG 1 zeigt eine schematische Darstellung einer Vorrichtung 1, an welche ein dreiphasiges Versorgungsnetz 9 angeschlossen ist. Das Versorgungsnetz 9 weist drei Phasen L1, L2, L3 auf. Über die Vorrichtung 1 erfolgt die Energieversorgung eines der Vorrichtung 1 nachgeschalteten Elektromotors 2. Die Vorrichtung 1 ist ein Leistungsschalter, mittels welchem ein Schutz des Elektromotors 2 vor Überstrom gewährleistet wird.

Je Phase des Versorgungsnetzes 9 weist die Vorrichtung 1 ein eingangsseitiges und ein ausgangsseitiges Anschlussmittel 61, 62, 63, 71, 72, 73 auf. Zur Energieversorgung des Verbrauchers 2 wird das erste Eingangsmittel 61 mit der ersten Phase L1 des Versorgungsnetzes 9 verbunden und das erste ausgangsseitige Anschlussmittel 71 mit dem Elektromotor 2 verbunden. Geräteintern wird die erste Phase L1 vom ersten eingangsseitigen Anschlussmittel 61 über eine erste Leitung 81 zum ersten ausgangsseitigen Anschlussmittel 71 geführt. Das zweite Eingangsmittel 62 wird mit der zweiten Phase L2 des Versorgungsnetzes 9 verbunden und das zweite ausgangsseitige Anschlussmittel 72 mit dem Elektromotor 2 verbunden. Geräteintern wird die zweite Phase L2 vom zweiten eingangsseitigen Anschlussmittel 62 über eine zweite Leitung 82 zum zweiten ausgangsseitigen Anschlussmittel 72 geführt. Das dritte Eingangsmittel 63 wird mit der dritten Phase L3 des Versorgungsnetzes 9 verbunden und das dritte ausgangsseitige Anschlussmittel 73 mit dem Elektromotor 2 verbunden. Geräteintern wird die dritte Phase L3 vom dritten eingangsseitigen Anschlussmittel 63 über eine dritte Leitung 83 zum dritten ausgangsseitigen Anschlussmittel 73 geführt.

Die Vorrichtung 1 umfasst einen dritten Kondensator 3 und je Leitung 81, 82, 83 eine sekundärseitige Spule 23, eine Diode 6, einen Spulenkern 5, ein Schaltelement 7 und eine Schaltung zum Aufladen des dritten Kondensators 3. Über den dritten Kondensator 3 erfolgt eine geräteinterne Energieversorgung der Vorrichtung 1.

Aus Gründen der Übersichtlichkeit sind die Schaltung, die sekundärseitige Spule 23, die Diode 6 und das Schaltelement 7 lediglich für die erste Leitung 81 abgebildet. Die zweite und dritte Leitung 82, 83 weisen jeweils einen analogen Aufbau auf.

Die Vorrichtung weist je Leitung 81, 82, 83 eine Primärseite und eine Sekundärseite auf. Die Primärseite umfasst einen Messwiderstand 30, welcher ein Shunt ist, einen ersten Kondensator 11, einen zweiten Kondensator 12, einen selbstleitenden Feldeffekttransistor 13, einen selbstsperrenden Feldeffekttransistor 14, eine erste primärseitige Spule 21 und eine zweite primärseitige Spule 22. Mittels der Schaltung wird somit ein Teil der Primärseite der Vorrichtung 1 gebildet. Die Sekundärseite umfasst die Diode 6 und die sekundärseitige Spule 23. Die sekundärseitige Spule 23 ist über die Diode 6 parallel zum dritten Kondensator 3 geschaltet.

Je Leitung ist der primärseitige Teil der Vorrichtung galvanisch getrennt zum sekundärseitigen Teil der Vorrichtung. Die Energieübertragung vom primärseitigen Teil zum sekundärseitigen Teil erfolgt mittels der ersten primärseitigen Spule 21, welche über den Spulenkern 5 mit der sekundärseitigen Spule gekoppelt ist.

Die Schaltung der ersten Leitung 81 ist derart ausgebildet, dass:
- sich der Messwiderstand 30 in der Leitung 81 befindet,
- der erste Kondensator 11 parallel zum Messwiderstand 30 geschaltet ist,
- eine Serienschaltung der ersten primärseitigen Spule 21 mit dem selbstleitenden Feldeffekttransistor 13 parallel zum ersten Kondensator 11 geschaltet ist,
- um den Spulenkern 5 die erste primärseitige Spule 21, die zweite primärseitige Spule 22 und die sekundärseitige Spule 23 gewickelt ist,
- parallel zur zweiten primärseitigen Spule 22 der zweite Kondensator 12 geschaltet ist,
- der zweite Kondensator 12 ausgangsseitig mit dem Source Anschluss 132 des selbstleitenden Feldeffekttransistors 13 verbunden ist,
- eingangsseitig am zweiten Kondensator 12 der Gate Anschluss 131 des selbstleitenden Feldeffekttransistors 13 angeschlossen ist,
- der selbstsperrende Feldeffekttransistor 14 parallel zum selbstleitenden Feldeffekttransistor 13 geschaltet ist,
- der Gate Anschluss 141 des selbstsperrenden Feldeffekttransistors 14 eingangsseitig am zweiten Kondensator 12 angeschlossen ist.

Über dem sich in der Leitung 81 befindenden Messwiderstand 30 fällt in Abhängigkeit des vorliegenden Phasenstroms eine Eingangsspannung U_{E} ab. Im bestromten Zustand des Leiters 81 wird über die erste primärseitige Spule 21 ein magnetischer Fluss im Spulenkern 5 erzeugt. Hierüber wird an der zweiten primärseitigen Spule 22 und der sekundärseitigen Spule 23 eine Spannung induziert.

Über die zweite primärseitige Spule 22 erfolgt eine getaktete Ansteuerung des selbstleitende Feldeffekttransistor 13 und des selbstsperrenden Feldeffekttransistor 14.

Durch das getaktete Ansteuern des selbstleitenden Feldeffekttransistors 13 wird die Schaltung zum Schwingen gebracht. Dadurch, dass der selbstsperrende Feldeffekttransistor 14 parallel zum selbstleitenden Feldeffekttransistor 13 geschaltet ist, wird der Wirkungsgrad der Energieversorgung zur Sekundärseite gesteigert. Mittels der ersten primärseitigen Spule 21 erfolgt über den Spulenkern 5 zur sekundärseitigen Spule 23 eine Energieübertragung von der Primärseite zur Sekundärseite der Vorrichtung 1.

Die erste und zweite primärseitigen Spule 21, 22 ist galvanisch getrennt zur sekundärseitigen Spule 23.

Die Vorrichtung 1 weist je Leitung 81, 82, 83 eine sekundärseitige Spule 23 auf. Die drei sekundärseitigen Spulen 23 der einzelnen Leiter 81, 82, 83 sind jeweils über deren Diode 6 mit dem dritten Kondensator 3 verbunden. Der dritte Kondensator 3 ist eingangsseitig jeweils mit der Diode 6 und ausgangsseitig jeweils mit dem nicht zur Diode 6 führenden Spulenanschluss 19 der jeweiligen sekundärseitigen Spule 23 verbunden. Der dritte Kondensator 3 wird somit über die drei sekundärseitigen Spulen 23 mit Energie gespeist.

Durch diesen Schaltungsaufbau wird erreicht, dass im bestromten Zustand mindestens eines der Leiter 81, 82, 83 eine über den dritten Kondensator 3 abfallende Ausgangsspannung U_{A} größer ist als die Eingangsspannung U_{E}.

Zur geräteinternen Energieversorgung weist der dritte Kondensator 3 zwei Anschlussstellen 15 auf. Hierüber kann eine geräteinterne elektronische Auswerteeinheit mit Energie versorgt werden.

Der dritte Kondensator 3 ist auf Masse der geräteinternen Auswerteeinheit gebracht.

Durch die drei Schaltungen der drei Leiter 81, 82, 83 kann eine galvanisch getrennte geräteinterne Energieversorgung der Vorrichtung 1 über den dritten Kondensator 3 bereitgestellt werden.

Die Schaltung ist vollständig galvanisch getrennt von der Sekundärseite der Vorrichtung 1.

Die drei sekundärseitigen Spulen 23 sind durch Einweg-Gleichrichtungen (die Dioden 6) miteinander gekoppelt und speisen zusammen den dritten Kondensator 3. Über den dritten Kondensator 3 erfolgt ferner eine sekundärseitige Pufferung der eingespeisten Energie.

Da die erzeugte Spannung über den dritten Kondensator 3 auf der Sekundärseite (U_{A}) proportional zu den bis zu drei Primarspannungen U_{E} (Spannungen an den Messwiderständen 30) und damit proportional zu den drei Primarströmen in den Phasen L1, L2, L3 ist, kann die Auswertung dieser Spannung zur Stromerfassung (z.B. Überstromauswertung) in den Phasen L1, L2, L3 verwendet werden.

Eine Stromerfassungseinheit 10 der Vorrichtung 1 ist hierfür parallel zum dritten Kondensator 3 geschaltet. Mittels dieser Stromerfassungseinheit 10 wird über die vorliegende Ausgangsspannung U_{A} einen Rückschluss auf die vorliegende Stromhöhe der Leitungen 81, 82, 83 gewonnen. Wird ein in der Stromerfassungseinheit 10 hinterlegter Schwellwert, welcher den 10-fachen Nennstrom der Leitung charakterisiert, überschritten, so identifiziert die Stromerfassungseinheit 10 einen Überstrom und unterbricht mittels der elektromechanischen Schaltelemente 8 der Leitungen 81, 82, 83 den über die Leitungen 81, 82, 83 erfolgenden Energiefluss zu dem nachgeschalteten Verbraucher 2.

Bei der Energieübertragung von der Primärseite zur Sekundärseite werden statt bewickelten Spulenkörpern die Spulenwindungen der ersten und zweiten primärseitigen Spule 21, 22 und der sekundärseitigen Spule 23 als Leiterplattenspule in einer ein- oder mehrlagigen Leiterplatte integriert. Die drei Leiterplattenspulen je Leitung 81, 82, 83 werden jeweils von dem Spulenkern 5 (z.B. Ferrit-Kern) umschlossen.

In diesem Ausführungsbeispiel erfolgt die Energieübertragung von der Primärseite zur Sekundärseite je Phase L1, L2, L3 mittels eines separaten Spulenkerns 5. Je Leitung 81, 82 ,83 sind die drei Spulenwindungen (erste und zweite primärseitige Spule 21, 22, sekundärseitige Spule 23) um einen Spulenkern 5 gewickelt. Hinsichtlich der geräteinternen Energieversorgung liegen somit innerhalb der Vorrichtung drei erste und zweite primärseitige Spule 21, 22, drei Spulenkerne 5, drei sekundärseitige Spulen 23 und drei Dioden 6 vor. Innerhalb der Vorrichtung sind die drei sekundärseitigen Spulen 23 jeweils über ihre Diode 6 (dreifache Einweg-Gleichrichtung) mit dem dritten Kondensator 3 verbunden, so dass sie diesen aufladen können.

Es ist ebenso denkbar, dass die erste und zweite primärseitige Spule 21, 22 und sekundärseitige Spule 23 der Leitungen zusammen einen gemeinsamen Spulenkern 5 aufweisen. Auf der Sekundärseite wären hierbei lediglich eine sekundärseitige Spule 5 sowie eine Diode 6 erforderlich. Die sekundärseitige Spule 5 wäre über die Diode 6 mit dem dritten Kondensator 3 verbunden, so dass sie diesen aufladen kann. Um den Spulenkern 5 wären somit lediglich drei erste und zweite primärseitige Spulen 21, 22 (für die drei Leitungen 81, 82, 83) sowie eine sekundärseitige Spule 23 gewickelt.

Zum Anlaufen/Anschwingen der die beschriebenen Schaltung wird der selbstleitenden Feldeffekttransistor 13 im Einschaltmoment der Primärspannung leitend und sorgt für den ersten Energiefluss im Übertrager (Energieübertragung von der ersten primärseitigen Spule zur sekundärseitigen Spule). Zur Steigerung des Wirkungsgrades ist parallel zum selbstleitenden Feldeffekttransistor 13 der selbstsperrende Feldeffekttransistor 14 geschaltet. Oberhalb der Einschaltschwelle der selbstsperrenden Feldeffekttransistor 14 kommt der vergleichsweise deutlich niederohmigere Durchlasswiderstand (im Vergleich zum selbstleitenden Feldeffekttransistor 13) zum Tragen und sorgt für einen verbesserten, weiteren Energiefluss im Übertrager.

Ein 1-, 2- oder 3phasiger AC- oder DC-Strom in den Phasen L 1, L2, L3 (z.B. Motorstrom) erzeugt unabhängig von der Außenleiterspannung an der Sekundärseite der Vorrichtung 1 eine ausreichend hohe Elektronikspannung, so dass eine stromgetriebene Energieversorgung der Vorrichtung 1 vorliegt. Ein 1phasiger, 2phasiger oder 3phasiger betrieb der Vorrichtung ist somit möglich.

Durch die neuartige Aufbauweise der Energieversorgung für den Motor- bzw. Leitungsschutz wird eine stromgetriebene Energieversorgung im AC- und DC- Betrieb möglich.

Mittels der Vorrichtung wird eine geräteinterne Energieversorgung trotz vollständiger galvanischen Trennung zwischen der Primarseite (Phasen L1, L2, L3) und der Sekundärseite (elektronische Auswerteschaltung) ermöglicht.

Für die galvanische Trennung der rückgekoppelten Anlauf-/Taktschaltung ist kein zweiter Übertrager je Phase notwendig, da dieser Schaltungsteil im selben Übertrager wie der jeweilige Aufwärtswandler integriert ist. Hierdurch werden Kosten eingespart.

Das Ausbilden der Spulen 21, 22, 23 als Leiterplattenspulen trägt ebenfalls dazu bei, die geräteinterne Energieversorgung kostengünstiger umzusetzen.

Die beschriebene Energieversorgung funktioniert bereits bei sehr kleinen Spannungen (kleiner 100 mV), also Spannungen weit unterhalb von Durchlassspannungen von Dioden. Dieses Energieversorgungs-Prinzip ist damit unter anderem dazu geeignet, aus kleinen Shuntspannungen (z.B. an thermischen oder elektrischen Messshunts) eine Energieversorgung für elektronische Schaltungen abzuleiten.

Es ist ebenso denkbar, dass das Schaltelement 7 der jeweiligen Leitung 81, 82, 83 vor dem Messwiderstand 30 der jeweiligen Leitung 81, 82, 83 angeordnet ist; d.h. die geräteinterne Leitung 81, 82, 83 wird jeweils von ihrem eingangsseitigen Anschluss 61, 62, 63 über das Schaltelement 7 zum Messwiderstand 30 geführt.

FIG 2 zeigt einen schematischen Aufbau der Sekundärseite der Vorrichtung aus FIG 1. Der dritte Kondensator 3 ist über die Dioden 6 mit den drei sekundärseitigen Spulen der einzelnen Phasen/Leiter verbunden und kann hierüber geladen werden.

Mittels der Stromerfassungseinheit 10 kann ein vorliegender Überstrom auf der Primärseite ermittelt werden. Die Stromerfassungseinheit 10 weist einen Vin Anschluss 25, einen VDD Anschluss 26 und einen VSS Anschluss 27 auf. Die Energieversorgung der Stromerfassungseinheit 10 erfolgt vollständig über den dritten Kondensator 3.

Eingangsseitig ist der dritte Kondensator 3 über einen ersten Widerstand 16 mit dem Vin Anschluss 25 der Stromerfassungseinheit 10 verbunden. Ausgangsseitig ist der dritte Kondensator 3 mit dem VSS Anschluss 27 der Stromerfassungseinheit 10 verbunden. Der VDD Anschluss 26 ist über einen zweiten Widerstand 17 mit der Eingangsseite des dritten Kondensators 3 verbunden. Der zweiten Widerstand 17 ist über eine ZenerDiode 20 mit dem VSS Anschluss 27 bzw. der Ausgangsseite des dritten Kondensators 3 verbunden. Hierdurch erfolgt eine Spannungsregelung von U_{A} nach U_{VDD} (Zener-Regelung). Ein dritter Widerstand 18 ist parallel zum Vin Anschluss 25 und VSS Anschluss 27 geschaltet.

Die Widerstände 16 und 18 bilden einen Spannungsteiler, um die primärstromabhängige Ausgangsspannung U_{A} anzupassen und am Messeingang (z.B. Analogeingang eines Mikrocontrollers) bereitzustellen. In der Stromerfassungseinheit 10 kann dieses Messsignal mit einem hinterlegten Überstrom-Sollwert verglichen werden, so dass ein über die Leitungen fließender Überstrom erkannt werden kann.

## Patentansprüche

1. Vorrichtung (1), an welche ein dreiphasiges Versorgungsnetz (9) anschließbar ist, wobei die Vorrichtung (1) einen dritten Kondensator (3), über welchen eine geräteinterne Energieversorgung der Vorrichtung (1) erfolgt, eine sekundärseitige Spule (23), eine Diode (6) und je Phase (91, 92, 93) eine Leitung (81, 82, 83) und eine Schaltung zur Energieübertragung umfasst, wobei die sekundärseitige Spule (23) über die Diode (6) parallel zum dritten Kondensator (3) geschaltet ist, wobei die Schaltung einen Messwiderstand (30), einen ersten und zweiten Kondensator (11, 12), einen selbstleitenden Feldeffekttransistor (13) und eine von der sekundärseitigen Spule (23) galvanisch getrennte erste und zweite primärseitige Spule (21, 22) umfasst, wobei die Schaltung derart ausgebildet ist, dass:
- sich der Messwiderstand (30) in der Leitung befindet,
- der erste Kondensator (11) parallel zum Messwiderstand (30) geschaltet ist,
- eine Serienschaltung der ersten primärseitigen Spule (21) mit dem selbstleitenden Feldeffekttransistor (13) parallel zum ersten Kondensator (11) geschaltet ist,
- im bestromten Zustand des Leiters (81, 82, 83) von der ersten primärseigen Spule (21) eine Energieübertragung zur zweiten primärseitigen Spule (22) und zur sekundärseitigen Spule (23) erfolgt,
- parallel zur zweiten primärseitigen Spule (22) der zweite Kondensator (12) geschaltet ist,
- der zweite Kondensator (12) ausgangsseitig mit dem Source Anschluss (132) des selbstleitenden Feldeffekttransistors (13) verbunden ist,
- eingangsseitig am zweiten Kondensator (12) der Gate Anschluss (131) des selbstleitenden Feldeffekttransistors (13) angeschlossen ist, so dass im bestromten Zustand des Leiters (81, 82, 83) der selbstleitende Feldeffekttransistor (13) getaktet angesteuert wird.

2. Vorrichtung (1) nach Anspruch 1, wobei die Schaltung einen selbstsperrenden Feldeffekttransistor (14) umfasst, welcher parallel zum selbstleitenden Feldeffekttransistor (13) geschaltet ist, wobei der Gate Anschluss (141) des selbstsperrenden Feldeffekttransistors (14) eingangsseitig am zweiten Kondensator (12) angeschlossen ist, so dass im bestromten Zustand des Leiters (81, 82, 83) der selbstsperrende Feldeffekttransistor (14) getaktet angesteuert wird.

3. Vorrichtung (1) nach einem der vorhergehenden Ansprüche, wobei die Vorrichtung (1) je Leitung (81, 82, 83) eine sekundärseitige Spule (23) und eine Diode (6) umfasst, wobei der dritte Kondensator (3) eingangsseitig jeweils mit der Diode (6) und ausgangsseitig jeweils mit dem nicht zur Diode (6) führenden Spulenanschluss (19) der sekundärseitigen Spule (23) verbunden ist.

4. Vorrichtung (1) nach einem der vorhergehenden Ansprüche, wobei die erste, zweite primärseitige Spule (21,22) und die sekundärseitige Spule (23) jeweils durch eine Leiterplattenspule ausgebildet sind.

5. Vorrichtung (1) nach einem der vorhergehenden Ansprüche, wobei der Messwiderstand (30) ein Shunt ist.

6. Vorrichtung (1) nach einem der vorhergehenden Ansprüche, wobei durch eine Auswertung der über den dritten Kondensator (3) vorliegenden Ausgangsspannung U_{A} eine Überstromauslösung für einen nachgeschalteten Verbraucher (2) erfolgt.

7. Vorrichtung (1) nach einem der vorhergehenden Ansprüche, wobei die geräteinterne Energieversorgung der Vorrichtung (1) vollständig über die am dritten Kondensator (3) anliegende Ausgangsspannung U_{A} erfolgt.

8. Vorrichtung (1) nach einem der vorhergehenden Ansprüche, wobei die Schaltungen einen gemeinsamen Spulenkern (5) aufweisen.

9. Vorrichtung (1) nach einem der vorhergehenden Ansprüche, wobei sich in den Leitungen (81, 82, 83) jeweils ein Schaltelement (7) befindet, mittels welchem der Energiefluss über die Leitung (81, 82, 83) unterbrochen werden kann.

## Claims

1. Device (1), to which a three-phase supply network (9) can be connected, wherein the device (1) comprises a third capacitor (3), by way of which an internal power supply of the device (1) is provided, a secondary-side coil (23), a diode (6) and per phase (91, 92, 93) a conductor (81, 82, 83) and a circuit for transmitting power, wherein the secondary-side coil (23) is connected in parallel with the third capacitor (3) by way of the diode (6), wherein the circuit comprises a measuring resistor (30), a first and second capacitor (11, 12), a self-conducting field effect transistor (13) and a first and second primary-side coil (21, 22) which are galvanically separated from the secondary-side coil (23), wherein the circuit is embodied such that:
- the measuring resistor (30) is disposed in the conductor,
- the first capacitor (11) is connected in parallel with the measuring resistor (30),
- a series circuit of the first primary-side coil (21) with the self-conducting field effect transistor (13) is connected in parallel with the first capacitor (11),
- in the energised state of the conductor (81, 82, 83) power is transmitted from the first primary-side coil (21) to the second primary-side coil (22) and to the secondary-side coil (23),
- the second capacitor (12) is connected in parallel with the second primary-side coil (22),
- the second capacitor (12) is connected on the output side to the source connection (132) of the self-conducting field effect transistor (13),
- the gate connection (131) of the self-conducting field effect transistor (13) is connected on the input side to the second capacitor (12) so that in the energised state of the conductor (81, 82, 83) the self-conducting field effect transistor (13) is controlled in a clocked manner.

2. Device (1) according to claim 1, wherein the circuit comprises a self-blocking field effect transistor (14), which is connected in parallel with the self-conducting field effect transistor (13), wherein the gate connection (141) of the self-blocking field effect transistor (14) is connected on the input side to the second capacitor (12) so that in the energised state of the conductor (81, 82, 83), the self-blocking field effect transistor (14) is controlled in a clocked manner.

3. Device (1) according to one of the preceding claims, wherein the device (1) comprises one secondary-side coil (23) and one diode (6) per conductor (81, 82, 83), wherein the third capacitor (3) is connected on the input side in each case with the diode (6) and on the output side in each case with the coil connection (19) of the secondary-side coil (23) which does not lead to the diode (6).

4. Device (1) according to one of the preceding claims, wherein the first, second primary-side coil (21, 22) and the secondary-side coil (23) are each embodied by a PCB coil.

5. Device (1) according to one of the preceding claims, wherein the measuring resistor (30) is a shunt.

6. Device (1) according to one of the preceding claims, wherein an overcurrent tripping for a downstream load (2) takes place by evaluating the output voltage U_{A} present across the third capacitor (3).

7. Device (1) according to one of the preceding claims, wherein the internal power supply of the device (1) is provided entirely by way of the output voltage U_{A} present on the third capacitor (3).

8. Device (1) according to one of the preceding claims, wherein the circuits have a shared coil core (5).

9. Device (1) according to one of the preceding claims, wherein a switching element (7) is disposed in the conductors (81, 82, 83) in each case, by means of which the flow of power across the conductor (81, 82, 83) can be interrupted.

## Revendications

1. Dispositif (1), auquel peut être raccordé un réseau (9) d'alimentation triphasé, le dispositif (1) comprenant un troisième condensateur (3), par lequel une alimentation en énergie, interne à l'appareil, du dispositif (1) s'effectue, une bobine (23) du côté secondaire, une diode (6) et, par phase (91, 92, 93), une ligne (81, 82, 83) et un circuit de transport d'énergie, la bobine (23) du côté secondaire étant montée, par la diode (6), en parallèle au troisième condensateur (3), le circuit comprenant une résistance (30) de mesure, un premier et un deuxième condensateurs (11, 12), un transistor (13) à effet de champ à déplétion et une première et une deuxième bobine (21, 22) du côté primaire, séparées galvaniquement de la bobine (23) du côté secondaire, le circuit étant constitué de manière à ce qui :
- la résistance (30) de mesure se trouve dans la ligne,
- le premier condensateur (11) est monté en parallèle à la résistance (30) de mesure,
- un circuit série de la première bobine (21) du côté primaire, ayant le transistor (13) à effet de champ à déplétion, est monté en parallèle au premier condensateur (11),
- à l'état parcouru par le courant de la ligne (81, 82, 83), un transport d'énergie a lieu de la première bobine (21) du côté primaire, à la deuxième bobine (22) du côté primaire et à la bobine (23) du côté secondaire,
- le deuxième condensateur (12) est monté en parallèle à la deuxième bobine (22) du côté primaire,
- le deuxième condensateur (12) est relié du côté de la sortie à la borne (132) de source du transistor (13) à effet de champ à déplétion,
- du côté de l'entrée est raccordée, au deuxième condensateur (12), la borne (131) de grille du transistor (13) à effet de champ à déplétion, de manière à ce que, lorsque du courant passe dans la ligne (81, 82, 83), le transistor (13) à effet de champ à déplétion soit commandé en cadence.

2. Dispositif (1) suivant la revendication 1, dans lequel le circuit comprend un transistor (14) à effet de champ à enrichissement, qui est monté en parallèle au transistor (13) à effet de champ à déplétion, la borne (141) de grille du transistor (14) à effet de champ à enrichissement étant raccordée du côté de l'entrée du deuxième condensateur (12), de manière à ce que, lorsque du courant (81, 82, 83) passe dans la ligne, le transistor (14) à effet de champ à enrichissement soit commandé en cadence.

3. Dispositif (1) suivant l'une des revendications précédentes, dans lequel le dispositif (1) comprend, par ligne (81, 82, 83), une bobine (23) du côté secondaire et une diode (6), le troisième condensateur (3) étant, du côté de l'entrée, relié respectivement à la diode (6) et du côté de la sortie respectivement à la borne (19) de bobine, ne menant pas à la diode (6), de la bobine (23) du côté secondaire.

4. Dispositif (1) suivant l'une des revendications précédentes, dans lequel la première, deuxième bobine (21, 22) du côté primaire et la bobine (23) du côté secondaire sont constituées chacune d'une bobine de plaquette à circuit imprimé.

5. Dispositif (1) suivant l'une des revendications précédentes, dans lequel la résistance (30) de mesure est un shunt.

6. Dispositif (1) suivant l'une des revendications précédentes, dans lequel il se produit un déclenchement d'une surintensité de courant pour un consommateur (2) en aval, par une exploitation de la tension U_{A} de sortie présente aux bornes du troisième condensateur (3).

7. Dispositif (1) suivant l'une des revendications précédentes, dans lequel l'alimentation en énergie, interne à l'appareil, du dispositif (1) s'effectue entièrement par la tension U_{A} de sortie s'appliquant aux bornes du troisième condensateur (3).

8. Dispositif (1) suivant l'une des revendications précédentes, dans lequel les circuits ont un noyau (5) de bobine commun.

9. Dispositif (1) suivant l'une des revendications précédentes, dans lequel, dans les lignes (81, 82, 83), se trouve respectivement un élément (7) d'interruption, au moyen duquel le flux d'énergie dans la ligne (81, 82, 83) peut être interrompu.
